# EUROPEAN PATENT SPECIFICATION

(11) **EP 4 250 431 B1**
(45) Date of publication and mention of the grant of the patent: **01.04.2026**
(21) Application number: 22881361.4
(22) Date of filing: 13.10.2022
(51) Int. Cl.: H01M 10/42, H01M 50/531, H01M 50/46, H01M 10/058, H01M 10/052, H01M 4/04

(54) **ELECTRODE FOR LITHIUM SECONDARY BATTERY HAVING ADHESIVE COATING PORTION ADDED THERETO AND METHOD OF MANUFACTURING THE SAME**
ELEKTRODE FÜR LITHIUMSEKUNDÄRBATTERIE MIT ZUSÄTZLICHEM HAFTBESCHICHTUNGSTEIL UND VERFAHREN ZUR HERSTELLUNG DAVON
ÉLECTRODE POUR BATTERIE SECONDAIRE AU LITHIUM SUR LAQUELLE UNE PARTIE DE REVÊTEMENT ADHÉSIVE EST AJOUTÉE, ET SON PROCÉDÉ DE FABRICATION

(30) Priority: 13.10.2021 KR 20210136064
(43) Date of publication of application: 27.09.2023
(73) Proprietor: LG Energy Solution, Ltd., Seoul 07335 (KR)
(72) Inventor: LEE, Ji Su, Daejeon 34122 (KR); KA, Kyung Ryun, Daejeon 34122 (KR); SUNG, In Hyouk, Daejeon 34122 (KR)
(74) Representative: Plasseraud IP
(86) International application number: PCT/KR2022/015466
(87) International publication number: WO 2023/063734

(56) References cited:
- CN-A- 111 916 645
- JP-A- 2012 178 326
- JP-A- 2012 221 913
- JP-B2- 6 413 254
- KR-A- 20050 118 579
- KR-A- 20060 103 188
- KR-A- 20120 005 069
- KR-A- 20170 096 517
- US-A1- 2015 291 859
- US-A1- 2019 198 860
- US-B2- 9 825 325

## Description

### [Technical Field]

This application claims the benefit of priority to Korean Patent Application No. 2021-0136064 filed on October 13, 2021.

The present invention relates to an electrode for a lithium secondary battery having an adhesive coating portion added thereto and a method of manufacturing the same. More particularly, the present invention relates to an electrode for a lithium secondary battery having an adhesive coating portion added thereto such that the electrode is integrally formed with a separator, whereby bending of the separator is prevented, and a method of manufacturing the same.

### [Background Art]

A lithium secondary battery, which can be repeatedly charged and discharged and which has high energy density, has attracted attention as a new energy source that has environmentally friendly characteristics, since the lithium secondary battery not only remarkably reduces the use of fossil fuels but also does not generate by-products as the result of the use of energy.

The lithium secondary battery is manufactured by receiving an electrode assembly including a positive electrode, a negative electrode, and a separator in a battery case together with an electrolyte and sealing the battery case.

An electrode including the positive electrode and the negative electrode may be manufactured by applying an electrode mixture layer to a portion of an electrode current collector excluding an electrode tab, and lamination may be performed in the state in which a separator is disposed at an outer surface of the electrode to manufacture an electrode assembly.

If the force of adhesion between the electrode and the separator that are laminated is small, the separator may be separated from the electrode and may bent or rolled during transfer, stacking, and assembly of the electrode assembly.

When the separator is bent, as described above, the positive electrode and the negative electrode come into contact with each other, whereby internal short circuit may occur.

Meanwhile, when the lithium secondary battery is exposed to a high temperature or is abnormally operated, such as internal/external short circuit, overcharging, or overdischarging, the separator shrinks due to heat that is generated, whereby the positive electrode and the negative electrode come into direct contact with each other, and therefore a short circuit possibility is increased.

Hence, various research to prevent internal short circuit, thereby securing safety of a battery cell, has been conducted.

Patent Document 1 discloses a jelly-roll type electrode assembly, wherein a non-coating portion having no positive electrode mixture layer is provided on an outer surface of an electrode foil at the outermost circumferential portion of a positive electrode, an adhesive tape is adhered to a portion of the non-coating portion, and the adhesive tape is also adhered to a separator protruding farther upwards and downwards from the positive electrode.

That is, in Patent Document 1, the adhesive tape is attached so as to connect a portion of the electrode foil and a portion of the separator to each other, whereby the position of the separator is fixed. In the above electrode assembly, a portion of a peripheral portion of the separator is fixed to the positive electrode, whereby it is possible to prevent internal short circuit due to shrinkage of the separator during heating.

In Patent Document 1, however, a structure in which the non-coating portion is formed at the outermost side or the innermost side of the jelly-roll type electrode assembly is used, whereby application to a stacked type electrode assembly is difficult. In addition, since the separator cannot be fixed at a temperature equal to or higher than the melting point of the adhesive tape, whereby internal short circuit may occur due to contact between the positive electrode and a negative electrode.

Therefore, there is a need to provide a method capable of preventing bending of a separator that may occur in a stacked type electrode assembly and preventing short circuit even though the separator shrinks.

### (Prior Art Document)

(Patent Document 1) Japanese Registered Patent Publication No. 3932096 (2007.03.23).

Document JP 2012 221913 A relates to an electrode for a lithium secondary battery.

### [Disclosure]

### [Technical Problem]

The present invention has been made in view of the above problems, and it is an object of the present invention to provide an electrode for a lithium secondary battery having an adhesive coating portion added thereto such that the state in which the electrode and a separator is stably maintained during a process of manufacturing the electrode, whereby insulation between a positive electrode and a negative electrode is secured.

It is another object of the present invention to provide a method of manufacturing the electrode for a lithium secondary battery.

### [Technical Solution]

The invention is defined in the appended claims. An electrode for a lithium secondary battery according to the present invention to accomplish the above objects includes an electrode mixture layer disposed on at least one of a first surface and a second surface of an electrode current collector, wherein the electrode current collector includes an electrode tab, which is a non-coating portion extending from an outer periphery of the electrode mixture layer as a portion other than a portion at which the electrode mixture layer is disposed, and an adhesive coating portion is disposed at at least a portion of an upper surface of the electrode tab and an upper surface of the electrode mixture layer.

The adhesive coating portion may be disposed at at least a portion of the upper surface of the electrode tab.

The adhesive coating portion may be disposed at an upper surface of an outer periphery of one side of the electrode mixture layer adjacent to the electrode tab.

The adhesive coating portion may be disposed at an upper surface of an outer periphery of the electrode mixture layer opposite an outer periphery of one side of the electrode mixture layer at which the electrode tab is formed.

The adhesive coating portion may be disposed at an upper surface of the electrode tab and an upper surface of an outer periphery of one side of the electrode mixture layer adjacent to the electrode tab.

The adhesive coating portion may be disposed at an upper surface of the electrode tab, an upper surface of an outer periphery of one side of the electrode mixture layer adjacent to the electrode tab, and an upper surface of an outer periphery of the electrode mixture layer opposite the outer periphery of the one side of the electrode mixture layer.

The adhesive coating portion may include a non-electric conductive adhesive.

The non-electric conductive adhesive may be made of a polymer material having a glass transition temperature (Tg) of 100°C or lower.

The adhesive coating portion may be disposed at at least one of the first surface and the second surface, and the electrode may include a separator attached to the adhesive coating portion on the at least one of the first surface and the second surface to which the adhesive coating portion is disposed.

The present invention provides a method of manufacturing the electrode for a lithium secondary battery. Specifically, the method includes (a) forming an electrode mixture layer on at least one surface of an electrode current collector, (b) adding an adhesive coating portion to at least a portion of an upper surface of an electrode tab extending from an outer periphery of the electrode mixture layer and an upper surface of the electrode mixture layer, (c) disposing a separator on the electrode mixture layer and the adhesive coating portion of step (b), and (d) pressing the separator.

Step (d) may include a heating process.

The adhesive coating portion may be formed on at least one of a positive electrode and a negative electrode.

The present invention provides an electrode assembly including the electrode for a lithium secondary battery, wherein the electrode assembly is a stacked type electrode assembly, a stacked and folded type electrode assembly, a laminated and stacked type electrode assembly, or a jelly-roll type electrode assembly.

In addition, the present invention may provide various combinations of the above solving means.

### [Advantageous Effects]

As is apparent from the above description, in an electrode for a lithium secondary battery according to the present invention, it is possible to secure the force of adhesion between the electrode and a separator by addition of an adhesive coating portion, whereby it is possible to prevent bending of the separator. Consequently, it is possible to secure insulation between a positive electrode and a negative electrode, and therefore it is possible to improve safety of a lithium secondary battery.

In addition, it is possible to adjust the adhesive force by adjusting the glass transition temperature of an adhesive constituting the adhesive coating portion, the coating area, and temperature and/or time of a heating process.

In addition, it is possible to inhibit shrinkage of the separator even at a high temperature, and therefore it is possible to prevent formation of a contact area between the positive electrode and the negative electrode when a battery cell is exposed to the high temperature.

Meanwhile, when the adhesive coating portion is applied over an electrode mixture layer and an electrode tab, it is possible to prevent generation of lithium precipitates even though an end of an outer periphery of the negative electrode is shorter than an end of an outer periphery of the positive electrode.

### [Description of Drawings]

FIG. 1 is a plan view and a partial enlarged sectional view of an electrode not part of the claimed invention.
FIG. 2 is a plan view and a partial enlarged sectional view of an electrode not part of the claimed invention.
FIG. 3 is a plan view and a partial enlarged sectional view of an electrode not part of the claimed invention.
FIG. 4 is a plan view and a partial enlarged sectional view of an electrode not part of the claimed invention.
FIG. 5 is a plan view and a partial enlarged sectional view of an electrode according to a fifth embodiment.
FIG. 6 is a plan view and a partial enlarged sectional view of an electrode according to a sixth embodiment.
FIG. 7 is a partial perspective view of electrodes not part of the claimed invention.
FIG. 8 is a view showing a process of manufacturing an electrode for a lithium secondary battery.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

An electrode according to the present invention may be configured to have a structure in which an electrode tab protrudes from an outer periphery of one side of an electrode current collector having a rectangular shape when viewed in plan and in which an electrode mixture layer is formed on the electrode current collector. In addition, the electrode according to the present invention may be configured to have a structure in which an electrode tab may be attached to a long sheet type electrode current collector and in which an electrode mixture layer is formed on the electrode current collector.

The electrode mixture layer is formed on at least one of a first surface, which is an upper surface, and a second surface, which is a lower surface, of the electrode current collector.

The electrode current collector includes an electrode tab, which is a non-coating portion extending from an outer periphery of the electrode mixture layer as a portion other than a portion at which the electrode mixture layer is formed, and an adhesive coating portion is added to at least a portion of an upper surface of the electrode tab and an upper surface of the electrode mixture layer. The non-coating portion means a portion at which the electrode mixture layer is not formed.

The adhesive coating portion is made of a material that allows a separator to be adhered thereto while having an insulation property. Even when the temperature of the adhesive coating portion reaches a temperature at which an adhesive function of the adhesive coating portion is lost and the separator shrinks, therefore, the adhesive coating portion remains added to the electrode, whereby it is possible to prevent contact with another electrode.

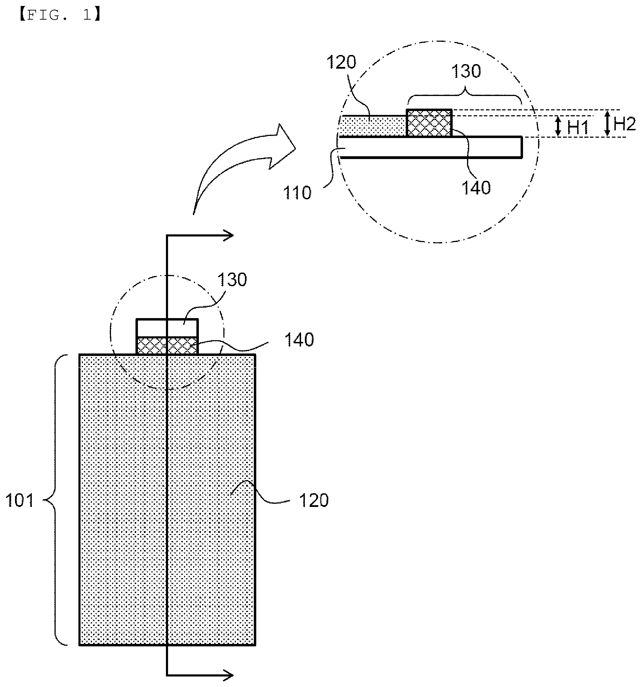

FIG. 1 is a plan view and a partial enlarged sectional view of an electrode according to a first embodiment.

Referring to FIG. 1, an electrode current collector 110 includes an electrode main body 101 having an electrode mixture layer 120 formed thereon and an electrode tab 130, which is a non-coating portion extending from an outer periphery of the electrode mixture layer 120.

An adhesive coating portion 140 is added to a portion of an upper surface of the electrode tab 130 at a position adjacent to the electrode mixture layer 120.

The force of adhesion between a separator and the electrode may be increased through the adhesive coating portion 140, whereby the force of coupling between the electrode and the separator may be increased and the electrode and the separator may be integrally coupled to each other.

Internal short circuit may occur between a positive electrode and a negative electrode as follows: internal short circuit may occur due to contact between a positive electrode mixture layer and a negative electrode mixture layer, contact between the positive electrode mixture layer and a negative electrode current collector, contact between a positive electrode current collector and the negative electrode mixture layer, or contact between the positive electrode current collector and the negative electrode current collector. When the positive electrode current collector (positive electrode tab) and the negative electrode mixture layer come into contact with each other, the largest amount of heat is generated.

When the adhesive coating portion 140 is added to the upper surface of the electrode tab, as shown in FIG. 1, it is possible to secure the force of adhesion between the electrode tab and the separator. In addition, even when the temperature of the adhesive coating portion 140 reaches a temperature at which an adhesive function of the adhesive coating portion is lost, it is possible to prevent contact between the positive electrode tab and the negative electrode mixture layer, since the adhesive coating portion 140 is added to an outer surface of the electrode tab.

The electrode tab 130 may be connected to an electrode lead and may extend outwards from a battery case so as to be used as an electrode terminal.

Consequently, the adhesive coating portion 140 is added to a portion of the electrode tab 130 adjacent to the electrode mixture layer 120; however, a non-coating portion is exposed from an end of the electrode tab 130 opposite the electrode mixture layer 120 such that the end of the electrode tab is coupled to the electrode lead.

The thickness H2 of the adhesive coating portion 140 may be equal to or greater than the thickness H1 of the electrode mixture layer 120 such that the adhesive coating portion and the separator can be easily attached to each other.

Alternatively, when the shape of a pressing roll configured to perform lamination is changed or a pressing method is adjusted, lamination may be possible even though the thickness H2 of the adhesive coating portion is less than the thickness H1 of the electrode mixture layer.

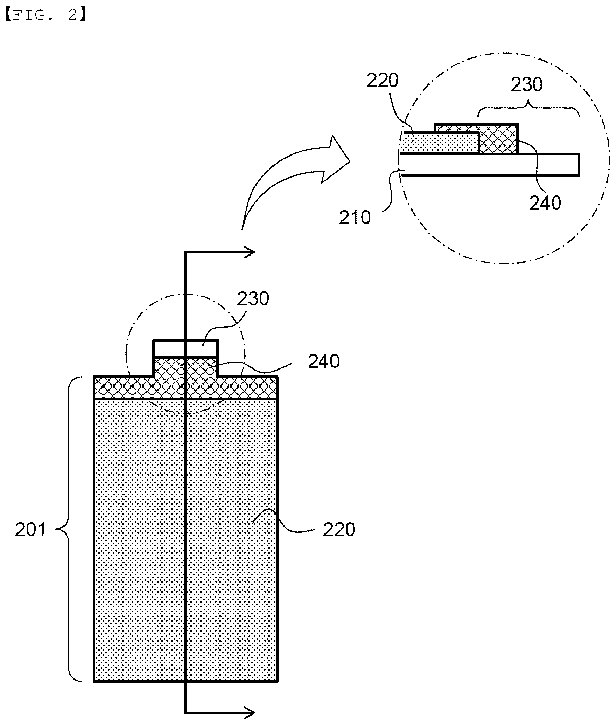

FIG. 2 is a plan view and a partial enlarged sectional view of an electrode according to a second embodiment.

Referring to FIG. 2, an electrode current collector 210 includes an electrode main body 201 having an electrode mixture layer 220 formed thereon and an electrode tab 230, which is a non-coating portion extending from an outer periphery of the electrode mixture layer 220.

The electrode tab 230 is formed as the result of a portion of an outer periphery of one side of the electrode main body 201 further extending outwards, and is coupled to an electrode lead.

An adhesive coating portion 240 is added to an upper surface of the electrode tab 230 and an upper surface of an outer periphery of one side of the electrode mixture layer 220 adjacent to the electrode tab 230. When the adhesive coating portion is added along the outer periphery of one side of the electrode mixture layer, as described above, it is possible to more widely secure the adhesive interface between a separator and the adhesive coating portion.

The adhesive coating portion 240 is added to only the remaining portion of the electrode tab excluding an outer end thereof, and the adhesive coating portion 240 is not applied to the end of the electrode tab 230 that functions as the electrode tab. The end of the electrode tab constitutes a weld portion for coupling with the electrode lead.

Meanwhile, when an electrode assembly is manufactured, the area of a negative electrode is generally formed so as to be greater than the area of a positive electrode. When the positive electrode and the negative electrode are misaligned with each other during a lamination process, lamination may be performed in the state in which the negative electrode is not present on the surface opposite the positive electrode.

In this case, an end region of the negative electrode may be overcharged, whereby lithium precipitation may occur, and therefore lithium dendrites may be formed. The lithium dendrites may grow toward the positive electrode through the separator, whereby internal short circuit may occur. In the present invention, as shown in FIG. 2, the adhesive coating portion is formed on the positive electrode so as to further extend in a direction from the outer periphery of the positive electrode mixture layer to a positive electrode tab. In this case, it is possible to prevent the occurrence of short circuit due to contact between lithium dendrites growing toward the positive electrode and the positive electrode tab.

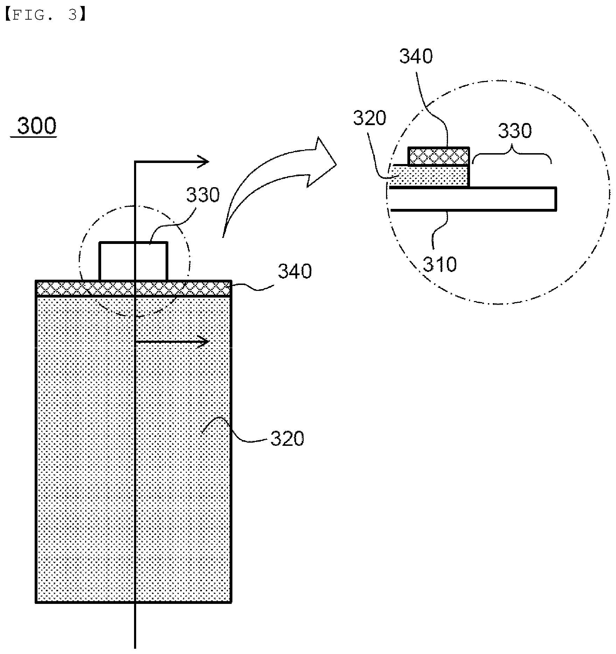

FIG. 3 is a plan view and a partial enlarged sectional view of an electrode according to a third embodiment.

Referring to FIG. 3, the electrode 300 is identical to the electrodes shown in FIGs. 1 and 2 in terms of the structures of an electrode mixture layer 320 formed on an electrode current collector 310 and an electrode tab 330.

An adhesive coating portion 340 is formed on only an upper surface of the electrode mixture layer 320. Specifically, the adhesive coating portion is formed on only an upper surface of an outer periphery of one side of the electrode mixture layer 320 adjacent to the electrode tab 330.

Consequently, a separator and the electrode may be stably coupled to each other via the adhesive coating portion at the outer periphery of one side of the electrode mixture layer adjacent to the electrode tab.

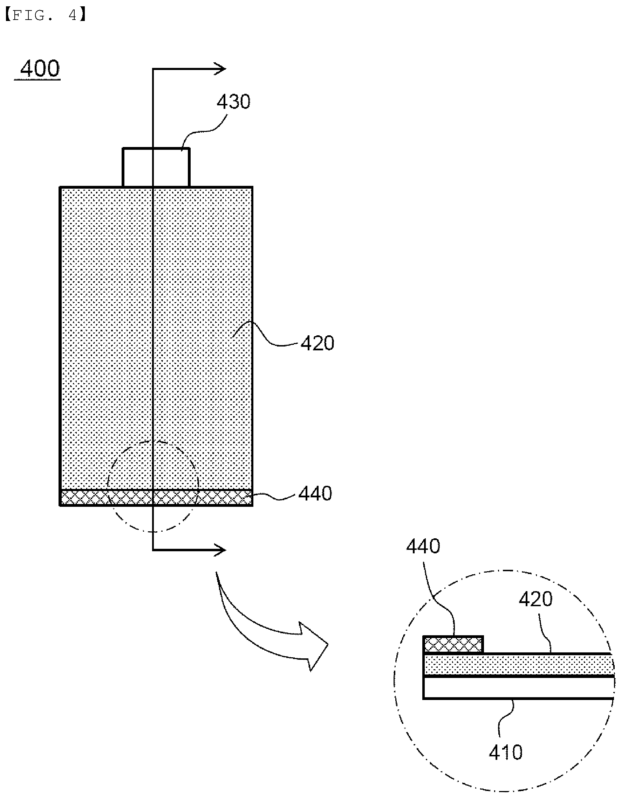

FIG. 4 is a plan view and a partial enlarged sectional view of an electrode according to a fourth embodiment.

Referring to FIG. 4, the electrode 400 is identical to the electrodes shown in FIGs. 1 to 3 in terms of the structures of an electrode mixture layer 420 formed on an electrode current collector 410 and an electrode tab 430.

An adhesive coating portion 440 is formed on an upper surface of an outer periphery of the electrode mixture layer 420 opposite an outer periphery of one side of the electrode mixture layer at which the electrode tab 430 is formed.

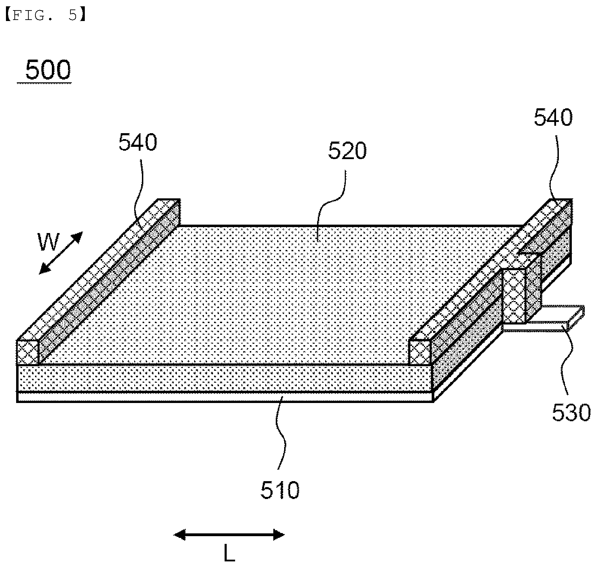

FIG. 5 is a plan view and a partial enlarged sectional view of an electrode according to a fifth embodiment.

Referring to FIG. 5, the electrode 500 is identical to the electrodes shown in FIGs. 1 to 4 in terms of the structures of an electrode mixture layer 520 formed on an electrode current collector 510 and an electrode tab 530.

An adhesive coating portion 540 is formed on an upper surface of the electrode tab 530, an upper surface of an outer periphery of one side of the electrode mixture layer 520 adjacent to the electrode tab 530, and an upper surface of an outer periphery of the electrode mixture layer 520 opposite the outer periphery of the one side of the electrode mixture layer 520.

FIG. 5 shows that the adhesive coating portion 540 of the electrode 500 is formed on outer peripheries of opposite sides of the electrode mixture layer in an overall width direction W thereof. Alternatively, the adhesive coating portion may be formed on outer peripheries of opposite sides of the electrode mixture layer in an overall length direction L thereof. Also, in the present invention, the adhesive coating portion may be formed on the outer peripheries of the opposite sides of the electrode mixture layer in the overall length direction L thereof and an upper surface of the electrode tab.

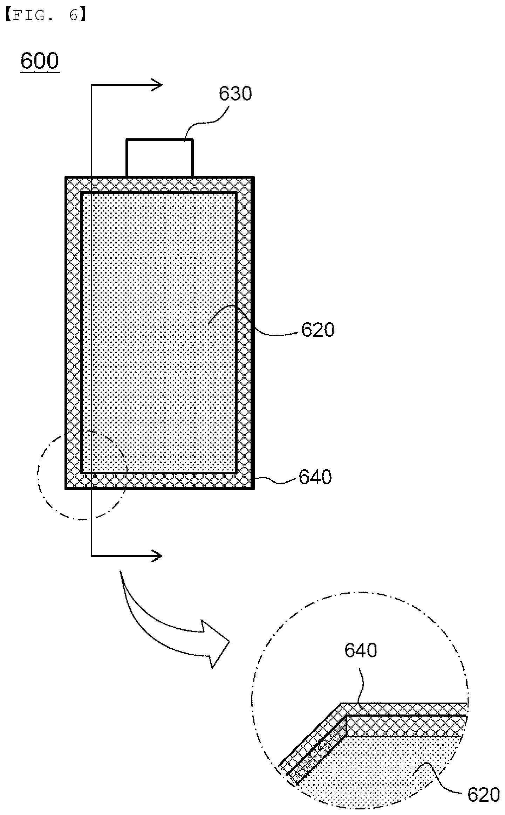

FIG. 6 is a plan view and a partial enlarged sectional view of an electrode according to a sixth embodiment.

Referring to FIG. 6, the electrode 600 is identical to the electrodes shown in FIGs. 1 to 5 in terms of the structures of an electrode mixture layer 620 formed on an electrode current collector and an electrode tab 630.

An adhesive coating portion 640 is formed along the entirety of an outer periphery of an upper surface of the electrode mixture layer 620, which has a rectangular shape when viewed in plan. Additionally, the adhesive coating portion may be formed on the entirety of the outer periphery of the upper surface of the electrode mixture layer and an upper surface of the electrode tab 630.

In the electrode 600 having the adhesive coating portion, formed as described above, added thereto, the adhesive interface between the adhesive coating portion 640 and a separator is widely formed, whereby the separator and the electrode may be stably coupled to each other.

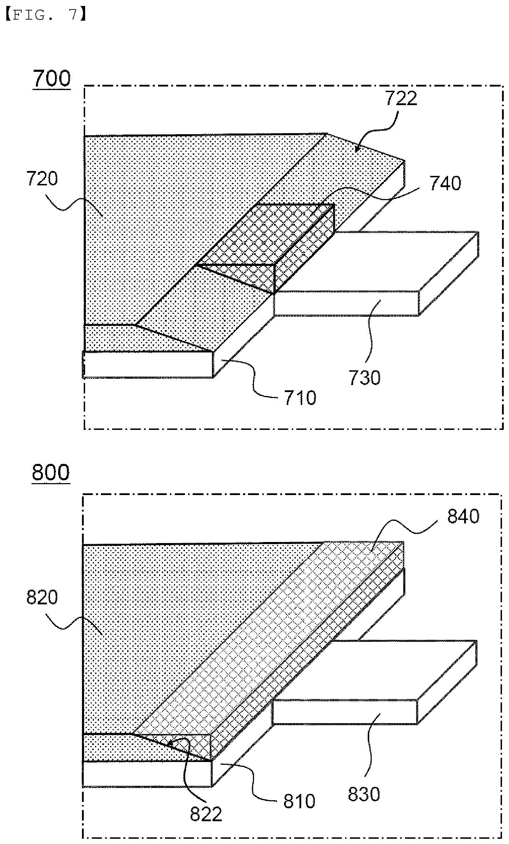

FIG. 7 is a partial perspective view of electrodes according to a seventh embodiment and an eighth embodiment.

Referring to FIG. 7, the electrode 700 is an electrode according to a seventh embodiment, and the electrode 800 is an electrode according to an eighth embodiment.

Each of the electrodes shown in FIG. 7 includes an inclined portion 722 or 822 formed at a portion of an outer periphery of an electrode mixture layer 720 or 820 to which an electrode tab 730 or 830 is connected, wherein an outer surface of the inclined portion in a thickness direction thereof is inclined. An adhesive coating portion 740 is shown as being applied to only a portion of an upper surface of the inclined portion 722 of the electrode mixture layer 720 adjacent to the electrode tab 730. Unlike this, the adhesive coating portion may be added so as to extend up to an upper part of the electrode tab 730.

Consequently, it is possible to secure the force of adhesion between the separator and the electrode through the adhesive coating portion at a region of the electrode adjacent to the electrode tab, at which a largest amount of heat is generated.

The adhesive coating portion 840 of FIG. 7 is shown as being applied along an outer periphery of an upper surface of the inclined portion 822 of the electrode mixture layer 820 adjacent to the electrode tab 830. Unlike this, the adhesive coating portion 840 may be added so as to extend up to an upper part of the electrode tab 830.

Consequently, it is possible to secure the force of adhesion between the separator and the electrode through the adhesive coating portion at the outer periphery of the electrode mixture layer 820 adjacent to the electrode tab 830.

The thickness of the adhesive coating portion 740 or 840 added to the inclined portion 722 or 822 is gradually increased toward the outer periphery of the electrode mixture layer 720 or 820, and the maximum thickness of the adhesive coating portion 740 or 840 is formed so as to be equal to or greater than the thickness of the electrode mixture layer 720 or 820. During a process of pressing the electrode and the separator so as to be attached to each other, therefore, the separator and the adhesive coating portion may be attached to each other in tight contact with each other.

Alternatively, the maximum thickness of the adhesive coating portion 740 or 840 may be formed so as to be less than the thickness of the electrode mixture layer 720 or 820. Even in this case, the adhesive coating portion and the separator may be attached to each other through lamination.

In each of the electrodes according to the first to eighth embodiments of the present invention, the adhesive coating portion may be added to at least one of the first surface and the second surface of the electrode current collector, and a separator may be attached to the adhesive coating portion on at least one of the first surface and the second surface of the electrode current collector, to which the adhesive coating portion is added.

The electrode may be a positive electrode and/or a negative electrode, wherein the separator may be attached to a portion of an outer surface of the positive electrode to which the adhesive coating portion is added, the separator may be attached to a portion of an outer surface of the negative electrode to which the adhesive coating portion is added, or the separator may be attached to the portion of the outer surface of each of the positive electrode and the negative electrode to which the adhesive coating portion is added.

As a result, an integrated structure in which the electrode and the separator are coupled to each other via the adhesive coating portion is formed, and therefore it is possible to prevent separation of the separator from the electrode, thereby preventing bending or rolling of the separator.

The adhesive coating portion includes an adhesive.

The adhesive may include a polymer material having a glass transition temperature (Tg) of 100°C or lower. For example, the adhesive may be polyacrylate, polyacrylic acid, polymethacrylate, polymethyl methacrylate, polyvinyl alcohol, polyvinyl chloride, polyvinylidene fluoride, polyvinylidene fluoride-hexafluoropropylene, polyethylene, polypropylene, polybutadiene, polyisoprene, styrene butadiene rubber, polyvinyl acetate, polyester, polysiloxane, polydimethylsiloxane, polyethylene terephthalate, polyethylene oxide, polypropylene oxide, polyacrylonitrile, polyvinyl acetal, polyvinyl propionate, ethyl cellulose, carboxymethyl cellulose, polyperfluoropropylene, natural rubber, or a derivative or copolymer thereof.

The adhesive coating portion is a portion adhered to the separator. In order to secure insulation between different electrodes, the adhesive included in the adhesive coating portion may be a non-electric conductive adhesive.

In the present invention, the kind of the adhesive included in the adhesive coating portion and the composition ratio of the adhesive may be adjusted to adjust the glass transition temperature of the adhesive. In addition, the area of the adhesive coating portion may be adjusted, and time and temperature necessary to attach the separator to the adhesive coating portion may also be adjusted. It is possible to adjust adhesive force of the adhesive coating portion by adjusting the composition, area, pressing time, and pressing temperature of the adhesive coating portion, as described above.

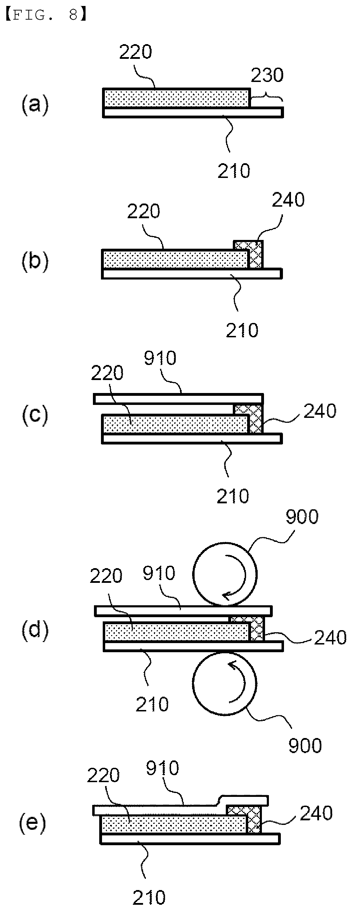

FIG. 8 is a view showing a process of manufacturing an electrode for a lithium secondary battery.

An electrode mixture layer 220 is formed on at least one surface of an electrode current collector 210. Unlike what is shown in FIG. 8, however, the electrode mixture layer 220 may be formed on each of opposite surfaces of the electrode current collector 210. In addition, the electrode mixture layer 220 may be formed so as to have a uniform thickness, or the electrode mixture layer may include an inclined portion formed at an outer periphery thereof adjacent to an electrode tab 230 such that an outer surface of the inclined portion in a thickness direction thereof is inclined, as in the electrode mixture layers 720 and 820 shown in FIG. 7.

An adhesive coating portion 240 is added to a portion of an upper surface of the electrode tab 230 and an upper surface of an outer periphery of one side of the electrode mixture layer 220 adjacent to the electrode tab 230.

The adhesive coating portion 240 may be added to only the remaining portion of the electrode tab excluding an outer end thereof, and the outer end of the electrode tab to which the adhesive coating portion is not added may be coupled to an electrode lead, whereby electrical connection may be achieved.

A separator 910 is disposed above the electrode mixture layer 220 and on the adhesive coating portion 240. A left end of the separator 910 extends farther than the electrode mixture layer 220. A right end of the separator 910 extends to an outer end of the adhesive coating portion 240 or extends farther than the outer end of the adhesive coating portion 240.

In the state in which the electrode and the separator are disposed so as to overlap each other, as described above, the electrode and the separator are pressed using a pair of pressing rolls 900 disposed above and under the electrode and the separator, respectively, such that the electrode and the separator are attached to each other.

The adhesive coating portion includes a non-electric conductive adhesive made of a polymer material having a glass transition temperature (Tg) of 100°C or lower. Pressing may be performed in the state in which the pressing rolls 900 are heated such that the temperature of the pressing rolls is higher than the glass transition temperature of the non-electric conductive adhesive, whereby it is possible to secure the force of coupling between the adhesive coating portion 240 and the separator 910.

The electrode manufactured using the above method forms an integrated structure together with the separator, and therefore it is possible to prevent separation of the separator from the electrode, thereby preventing bending or rolling of the separator. In addition, it is possible to secure insulation between a positive electrode and a negative electrode.

The electrode manufactured as described above may be used as an electrode for a lithium secondary battery and may constitute a stacked type electrode assembly, a stacked and folded type electrode assembly, a laminated and stacked type electrode assembly, or a jelly-roll type electrode assembly.

In addition, the above electrode may be received in a battery case to constitute a unit battery, and a battery module or a battery pack including the unit battery may be provided.

Those skilled in the art to which the present invention pertains will appreciate that various applications and modifications are possible without departing from the scope of the invention as defined in the appended claims.

### (Description of Reference Numerals)

101, 201: Electrode main bodies
110, 210, 310, 410, 510: Electrode current collectors
120, 220, 320, 420, 520, 620, 720, 820: Electrode mixture layers
130, 230, 330, 430, 530, 630, 730, 830: Electrode tabs
140, 240, 340, 440, 540, 640, 740, 840: Adhesive coating portions
722, 822: Inclined portions
300, 400, 500, 600, 700, 800: Electrodes
900: Pressing roll
910: Separator
H1: Thickness of electrode mixture layer
H2: Thickness of adhesive coating portion
L: Overall length direction
W: Overall width direction

## Claims

1. An electrode (500) for a lithium secondary battery, the electrode comprising:
an electrode mixture layer (520) disposed on at least one of a first surface and a second surface of an electrode current collector (510), wherein
the electrode current collector (510) comprises an electrode tab (530), which is a non-coating portion extending from an outer periphery of the electrode mixture layer (520) as a portion other than a portion at which the electrode mixture layer (520) is disposed, and
an adhesive coating portion (540) is disposed at at least a portion of an upper surface of the electrode tab (530) and an upper surface of the electrode mixture layer (520), and
**characterized in that**, the adhesive coating portion (540) is disposed at an upper surface of the electrode tab (530), an upper surface of an outer periphery of one side of the electrode mixture layer (520) adjacent to the electrode tab (530), and an upper surface of an outer periphery of the electrode mixture layer (520) opposite the outer periphery of the one side of the electrode mixture layer (520).

2. The electrode according to claim 1, wherein the adhesive coating portion (540) comprises a non-electric conductive adhesive.

3. The electrode according to claim 2, wherein the non-electric conductive adhesive is made of a polymer material having a glass transition temperature (Tg) of 100°C or lower.

4. The electrode according to claim 1, wherein
the adhesive coating portion (540) is disposed at at least one of the first surface and the second surface, and
the electrode comprises a separator (910) attached to the adhesive coating portion (540) on the at least one of the first surface and the second surface to which the adhesive coating portion (540) is disposed.

5. A method of manufacturing the electrode according to any one of claims 1 to 4, the method comprising:
(a) forming an electrode mixture layer on at least one surface of an electrode current collector (510);
(b) adding an adhesive coating portion (540) to at least a portion of an upper surface of an electrode tab (530) extending from an outer periphery of the electrode mixture layer (520) and an upper surface of the electrode mixture layer (520); to an upper surface of the electrode tab (530), to an upper surface of an outer periphery of one side of the electrode mixture layer (520) adjacent to the electrode tab (530), and to an upper surface of an outer periphery of the electrode mixture layer (520) opposite the outer periphery of the one side of the electrode mixture layer (520) ;
(c) disposing a separator (910) on the electrode mixture layer and the adhesive coating portion of step (b); and
(d) pressing the separator (910).

6. The method according to claim 5, wherein step (d) comprises a heating process.

7. The method according to claim 5, wherein the adhesive coating portion (540) is formed on at least one of a positive electrode and a negative electrode.

8. An electrode assembly comprising the electrode according to any one of claims 1 to 4, wherein the electrode assembly is a stacked type electrode assembly, a stacked and folded type electrode assembly, a laminated and stacked type electrode assembly, or a jelly-roll type electrode assembly.

## Patentansprüche

1. Elektrode (500) für eine Lithiumsekundärbatterie, wobei die Elektrode umfasst:
eine Elektrodenmischungsschicht (520), welche an wenigstens einer aus einer ersten Fläche und einer zweiten Fläche eines Elektrodenstromkollektors (510) angeordnet ist, wobei
der Elektrodenstromkollektor (510) eine Elektrodenlasche (530) umfasst, welche ein nicht beschichteter Abschnitt ist, welcher sich von einem Außenumfang der Elektrodenmischungsschicht (520) als ein Abschnitt erstreckt, der von einem Abschnitt verschieden ist, an welchem die Elektrodenmischungsschicht (520) angeordnet ist, und
ein Klebstoffbeschichtungsabschnitt (540) an wenigstens einem Abschnitt einer oberen Fläche der Elektrodenlasche (530) und einer oberen Fläche der Elektrodenmischungsschicht (520) angeordnet ist und
**dadurch gekennzeichnet, dass** der Klebstoffbeschichtungsabschnitt (540) an einer oberen Fläche der Elektrodenlasche (530), einer oberen Fläche eines Außenumfangs einer Seite der Elektrodenmischungsschicht (520) benachbart zu der Elektrodenlasche (530) und einer oberen Fläche eines Außenumfangs der Elektrodenmischungsschicht (520) entgegengesetzt zu dem Außenumfang der einen Seite der Elektrodenmischungsschicht (520) angeordnet ist.

2. Elektrode nach Anspruch 1, wobei der Klebstoffbeschichtungsabschnitt (540) einen nicht elektrisch leitfähigen Klebstoff umfasst.

3. Elektrode nach Anspruch 2, wobei der nicht elektrisch leitfähige Klebstoff aus einem Polymermaterial hergestellt ist, welches eine Glasübergangstemperatur (Tg) von 100 °C oder weniger aufweist.

4. Elektrode nach Anspruch 1, wobei
der Klebstoffbeschichtungsabschnitt (540) an wenigstens einer aus der ersten Fläche und der zweiten Fläche angeordnet ist und
die Elektrode einen Separator (910) umfasst, welcher an dem Klebstoffbeschichtungsabschnitt (540) an der wenigstens einen der ersten Fläche und der zweiten Fläche angebracht ist, an welcher der Klebstoffbeschichtungsabschnitt (540) angeordnet ist.

5. Verfahren zur Herstellung der Elektrode nach einem der Ansprüche 1 bis 4, wobei das Verfahren umfasst:
(a) Bilden einer Elektrodenmischungsschicht an wenigstens einer Fläche eines Elektrodenstromkollektors (510);
(b) Hinzufügen eines Klebstoffbeschichtungsabschnitts (540) zu wenigstens einem Abschnitt einer oberen Fläche einer Elektrodenlasche (530), welcher sich von einem Außenumfang der Elektrodenmischungsschicht (520) und einer oberen Fläche der Elektrodenmischungsschicht (520) erstreckt; zu einer oberen Fläche der Elektrodenlasche (530), zu einer oberen Fläche eines Außenumfangs einer Seite der Elektrodenmischungsschicht (520) benachbart zu der Elektrodenlasche (530) und zu einer oberen Fläche eines Außenumfangs der Elektrodenmischungsschicht (520) entgegengesetzt zu dem Außenumfang der einen Seite der Elektrodenmischungsschicht (520);
(c) Anordnen eines Separators (910) an der Elektrodenmischungsschicht und dem Klebstoffbeschichtungsabschnitt aus Schritt (b); und
(d) Pressen des Separators (910).

6. Verfahren nach Anspruch 5, wobei Schritt (d) einen Erwärmungsprozess umfasst.

7. Verfahren nach Anspruch 5, wobei der Klebstoffbeschichtungsabschnitt (540) an wenigstens einer aus einer positiven Elektrode und einer negativen Elektrode gebildet ist.

8. Elektrodenanordnung, umfassend die Elektrode nach einem der Ansprüche 1 bis 4, wobei die Elektrodenanordnung eine Elektrodenanordnung vom gestapelten Typ, eine Elektrodenanordnung vom gestapelten und gefalteten Typ, eine Elektrodenanordnung vom laminierten und gestapelten Typ oder eine Elektrodenanordnung vom Jelly-Roll-Typ ist.

## Revendications

1. Électrode (500) pour batterie secondaire au lithium, l'électrode comprenant :
une couche (520) de mélange pour électrode disposée sur au moins une parmi une première surface et une seconde surface d'un collecteur (510) de courant d'électrode, dans laquelle
le collecteur (510) de courant d'électrode comprend une languette (530) d'électrode, qui est une partie sans revêtement s'étendant à partir d'une périphérie extérieure de la couche (520) de mélange pour électrode en tant que partie autre qu'une partie au niveau de laquelle est disposée la couche (520) de mélange pour électrode, et
une partie (540) de revêtement adhésif est disposée au niveau d'au moins une partie d'une surface supérieure de la languette (530) d'électrode et d'une surface supérieure de la couche (520) de mélange pour électrode, et
**caractérisée en ce que** la partie (540) de revêtement adhésif est disposée au niveau d'une surface supérieure de la languette (530) d'électrode, d'une surface supérieure d'une périphérie extérieure d'un côté de la couche (520) de mélange pour électrode adjacent à la languette (530) d'électrode, et d'une surface supérieure d'une périphérie extérieure de la couche (520) de mélange pour électrode opposée à la périphérie extérieure de l'un des côtés de la couche (520) de mélange pour électrode.

2. Électrode selon la revendication 1, dans laquelle la partie (540) de revêtement adhésif comprend un adhésif non conducteur électrique.

3. Électrode selon la revendication 2, dans laquelle l'adhésif non conducteur électrique est constitué d'un matériau polymère présentant une température de transition vitreuse (Tg) inférieure ou égale à 100 °C.

4. Électrode selon la revendication 1, dans laquelle
la partie (540) de revêtement adhésif est disposée au niveau d'au moins une parmi la première surface et la seconde surface, et
l'électrode comprend un séparateur (910) fixé à la partie (540) de revêtement adhésif sur l'au moins une parmi la première surface et la seconde surface sur laquelle est disposée la partie (540) de revêtement adhésif.

5. Procédé de fabrication de l'électrode selon l'une quelconque des revendications 1 à 4, le procédé comprenant :
(a) la formation d'une couche de mélange pour électrode sur au moins une surface d'un collecteur (510) de courant d'électrode ;
(b) l'ajout d'une partie (540) de revêtement adhésif sur au moins une partie d'une surface supérieure d'une languette (530) d'électrode s'étendant depuis la périphérie extérieure de la couche (520) de mélange pour électrode et d'une surface supérieure de la couche (520) de mélange pour électrode ;sur une surface supérieure de la languette (530) d'électrode, sur une surface supérieure d'une périphérie extérieure d'un côté de la couche (520) de mélange pour électrode adjacent à la languette (530) d'électrode, et sur une surface supérieure d'une périphérie extérieure de la couche (520) de mélange pour électrode opposée à la périphérie extérieure du côté de la couche (520) de mélange pour électrode ;
(c) la disposition d'un séparateur (910) sur la couche de mélange pour électrode et la partie de revêtement adhésif de l'étape (b) ; et
(d) l'application d'une pression sur le séparateur (910).

6. Procédé selon la revendication 5, dans lequel l'étape (d) comprend un processus de chauffage.

7. Procédé selon la revendication 5, dans lequel la partie (540) de revêtement adhésif est formée sur au moins une parmi une électrode positive et une électrode négative.

8. Ensemble électrode comprenant l'électrode selon l'une quelconque des revendications 1 à 4, dans lequel l'ensemble électrode est un ensemble électrode de type empilé, un ensemble électrode de type empilé et plié, un ensemble électrode de type stratifié et empilé, ou un ensemble électrode de type enroulé.
